# EUROPÄISCHE PATENTANMELDUNG

(11) **EP 3 338 882 A1**
(43) Veröffentlichungstag der Anmeldung: **27.06.2018**
(21) Anmeldenummer: 17020481.2
(22) Anmeldetag: 19.10.2017
(51) Int. Cl.: B01F 5/06

(54) **MISCHELEMENT MIT HOHER FESTIGKEIT UND MISCHWIRKUNG**

(30) Priorität: 14.12.2016 CH 16512016
(71) Anmelder: Streiff, Felix, 8457 Humlikon (CH)
(72) Erfinder: Streiff, Felix, 8457 Humlikon (CH)

(57) **Zusammenfassung**

Mischelemente mit hoher Festigkeit für den Einbau in Rohre oder Kanäle als statische Mischer, vorzugsweise im laminaren Strömungsbereich bei hochviskosen Medien. Die Mischelemente bestehen aus einem tragenden Ring 1 und damit verbundene quer zur Rohrachse stehenden, inneren Umlenkflächen 2,2' und in axialer Richtung stehende radialen Trennstege 3,3' wobei die Umlenkflächen das Mischelement in zwei axiale Abschnitte 1a,1b teilen und in jedem dieser Abschnitte mindestens 1 radialer Trennsteg angeordnet ist und die Umlenkflächen offene Durchtritte 4,4' in axialer Richtung aufweisen und die radialen Trennstege auf beiden Seiten der Umlenkflächen und die radialen Trennstege aufeinanderfolgender Mischelemente sich kreuzen. Die Strömung wird durch den radialen Trennsteg am Eintritt (Abschnitt 1a) geteilt und getrennt zu den Öffnungen 4,4' geführt. Diese münden in durch den Steg am Austritt (Abschnitt 1b) getrennte Räume wo die Strömung wieder auf den vollen Querschnitt gedehnt wird. Die querstehenden Umlenkflächen und die Öffnungen aufeinanderfolgender Mischelemente sind gegeneinander versetzt so dass die Strömung keinen direkten axialen Durchgang findet oder nur eine Drehung erfährt. Durch die Verbindung der axial ausgerichteten Trennstege und der Umlenkflächen mit dem tragenden Ring mit bevorzugt fast quadratischer Innenkontur entsteht ein ausserordentlich stabiles Mischelement. Damit wird diese effiziente Mischerstruktur aus radialen Trennstegen und quer zur Rohrachse stehenden Umlenkflächen bei vielen Anwendungen einsetzbar die bisher aus Festigkeitsgründen nicht möglich waren. Durch die Grösse der Öffnungen die vom Abschnitt 1a in den Abschnitt 1b führen kann die Schergeschwindigkeit erstmals unabhängig vom Rohrdurchmesser eingestellt werden. So können auch schwierige Mischaufgaben mit sehr unterschiedlichen Komponenten gelöst werden.

## Beschreibung

### Beschreibung

Die Erfindung betrifft Mischelemente für den Einbau in Rohre oder Kanäle als statische Mischer, vorzugsweise im laminaren Strömungsbereich bei hochviskosen Medien. Bekannte, hier auch teilweise aufgeführte statische Mischer und deren Funktion und Anwendung werden z. B. in dem Artikel "Statische Mischer", Grundlagen und laminares Mischen, F. A. Streiff, wdm 1/2003, S. 16 - 23 (Zeitschrift: wägen, dosieren + mischen) oder im Buch Matthias Kraume, Mischen und Rühren, Kap 9: Statisches Mischen, S. 197 - 219, 2003, Wiley-VCH Verlag GmbH, Weinheim beschrieben. Hier benutzte Mischerbezeichnungen, Formelzeichen oder Beziehungen können in dieser Literatur nachgeschlagen werden. Solche Mischelemente haben breite industrielle Anwendungen zum in-line Mischen in kontinuierlichen Anlagen z. B. in der Herstellung und Verarbeitung von Kunststoffen, der chemischen Industrie oder in der Nahrungsmittelindustrie.

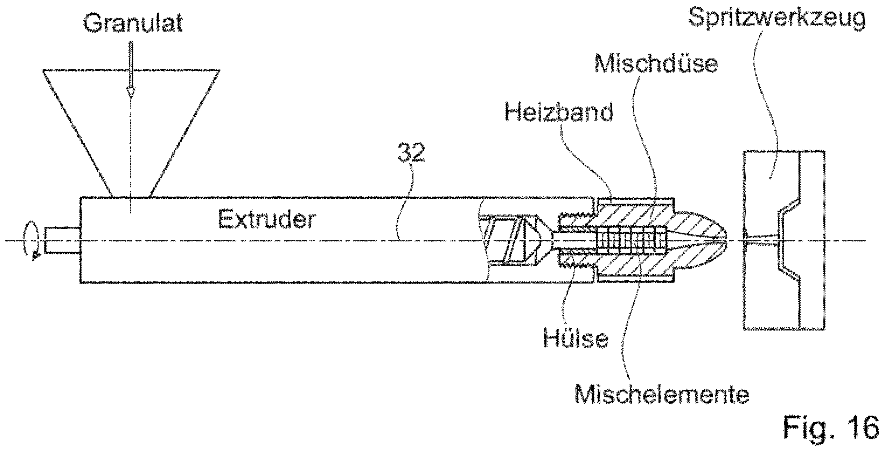

Bekannte statische Mischelemente für hochviskose Medien haben eine Struktur aus zur Strömungsrichtung geneigten und sich kreuzenden Stegen. Ein Mischelement weist dabei eine Länge von 1 Rohrdurchmesser (D) auf. Bekannt und weit verbreitet sind sie als SMX oder einfach X Mischer. Statische Mischer mit hoher Festigkeit und guter laminarer Mischwirkung sind zur Homogenisierung der Schmelze bei der Extrusion oder beim Spritzguss von Kunststoffen erforderlich (Fig. 16). Beim Spritzguss können Druckabfälle von mehreren 100 bar über eine Mischeinheit auftreten und die Festigkeit der Mischelemente sollte noch wesentlich höher sein um auch Druckspitzen bei zu kalter Schmelze zu überstehen. Zur Homogenisierung der Schmelze in Spritzdüsen oder vor Extrusionswerkzeugen bei der Kunststoffverarbeitung werden üblicherweise 4 solche Elemente bzw. 4D eingesetzt weil die Schmelze bereits teilweise vorgemischt ist. Die SMX Struktur ist in sich sehr schwach und es ist erforderlich diese Elemente fest in tragende Hülsen einzulöten und die Stege verhältnismässig dick auszubilden um den auftretenden Kräften einigermassen zu genügen. Es wird versucht die Festigkeit durch zusätzliche, interne Verstärkungen zu erhöhen (z. B. EP 0727249). Durch die dicken Stege und Verstärkungen steigt der Druckverlust an und den Einsatzmöglichkeiten sind enge Grenzen gesetzt. Trotzdem kommt es oft zum Kollaps der Struktur bei zu kalter Schmelze infolge ungenügender Aufheizzeit. Besonders gefährdet sind freistehende Stegteile. Die Elemente können nicht einzeln ausgebaut werden und sind somit zur Reinigung und Inspektion nicht mehr zugänglich. In WO 00/78440 wird eine Lösung für das Problem beschrieben. Danach werden die SMX Elemente in 4 Teilabschnitte zerschnitten und einzeln in einen Ring mit der Länge D/4 fest eingebaut oder als monolithisches Teil z.B. in Feinguss zusammen mit dem Ring hergestellt. Ein entsprechender Einsatz für eine Spritzdüse besteht dann aus 16 Einzelteilen. Bei der Homogenisierung von völlig getrennten Komponenten mit ähnlicher Viskosität sind 10D SMX Mischelemente oder dann sogar 40 solcher Einzelteile erforderlich. Schwierigere Mischaufgaben mit unterschiedlicher Viskosität der Komponenten erfordern noch längere Mischer und über 100 Einzelteile! Bei der Herstellung von Kunststoffen in kontinuierlichen Polymerisationsanlagen sind ebenfalls hochviskose Medien zu mischen und es treten auch Druckabfälle bis über 100 bar auf. Die Mengenströme sind sehr gross und es müssen grosse Rohrdimensionen gewählt werden. Auch hier werden gerne SMX Mischelemente eingesetzt weil diese auch hohe Viskositätsunterschiede der Komponenten mischen können. Allerdings sind dann sehr lange Mischer und eine ausreichende Schergeschwindigkeit erforderlich. Hier müssen die konventionellen SMX Mischelemente in Gruppen fest mit den Rohren verschweisst werden damit die auftretenden Kräfte aufgenommen werden können. Das erfordert die Aufteilung der Mischrohre in kurze Teilstücke von 3 - 4D die zusammengeweisst werden müssen. Der Ein- und Ausbau ist nicht möglich und die eigentlich nötigen Inspektionen der Schweissnähte sind nicht durchführbar. Bei anderen industriellen Anwendungen z.B. in der Nahrungsmittel- oder der chemischen Industrie sind SMX Mischelemente aus Kunststoff nicht möglich weil die Festigkeit nicht genügt. Darum müssen Elemente aus teurerem Material wie Stahl eingesetzt werden.

Andere bekannte statische Mischelemente für hochviskose Medien sind z. B. der Multiflux (US 3.051.453) oder der Wendelmischer. Hier wird die Strömung im ersten Element geteilt und wieder ausgedehnt. Der Vorgang wiederholt sich in den folgenden Elementen. Aus 2 Schichten am Eintritt entstehen so 4,8,16,32,....usw. Schichten. Nach n Mischelementen sind 2ⁿ Schichten entstanden. Die Länge der Wendelmischer beträgt mindestens 1 - 1.5 Rohrdurchmesser (D). Die Mischerlänge für die Homogenisierung ist bis 3x grösser als beim SMX Mischer und bei unterschiedlichen Viskositäten der Komponenten versagen diese Mischer. Der Multiflux Mischer ist aus 2 Trennstegen und 4 keilförmigen Umlenkkörpern aufgebaut. Die Mischkörper nehmen bis über 30% des Rohrvolumens ein. Deshalb ist der Druckverlustbeiwert dieser Mischkörper wesentlich grösser als beim Wendelmischer und vergleichbar mit dem SMX Mischer. Mit diesem Mischer werden Homogenisierungslängen von ca. 15 - 17 Rohrdurchmesser erreicht. Sowohl Mischer mit Wendel- als auch mit Multiflux Struktur werden als Einweg-Statikmischer aus Kunststoff in grossen Mengen hergestellt. In der EP 0749776 oder EP 0815929 wird ein Mischer mit dem gleichen Mischgesetz wie der Multiflux Mischer aber mit einfacherer und verbesserter Form beschrieben. Diese Mischkörper nehmen weniger als 15% des Rohrvolumens ein und die Länge eines Elementes nach diesen Erfindungen beträgt nur ca. 0.5 Rohrdurchmesser (D) oder weniger. Diese Mischelemente sind gegenüber den SMX Elementen zur Homogenisierung viel wirksamer und weisen einen wesentlich geringeren Druckverlust auf. Wie in EP 0749776 beschrieben beträgt der Druckverlustbeiwert NeReD nur 500 gegenüber 1200 beim SMX und die sogenannte Homogenisierungslänge nur 8D gegenüber 10D beim SMX. Eine quadratische Form des Kanalquerschnitts erwies sich günstiger für die gleichmässige Schichtbildung als ein kreisrunder Querschnitt. Die Mischelemente nach EP 0749776 oder EP 0815929 weisen den Nachteil auf, dass sie mechanisch ebenfalls schwach sind, selbst dann wenn diese mit Verstärkungen versehen werden. Für grössere Durchmesser und viele Anwendungen können sie nicht eingesetzt werden. Der Einsatz dieser Mischerstruktur blieb wegen dieser Nachteile auf sogenannte Einwegmischer für reaktive Harze beschränkt. Hier sind die verarbeiteten Mengenströme und die Mischerdurchmesser relativ gering. Ein weiterer Nachteil dieser Mischer ist, dass sich besonders bei unterschiedlichen Viskositäten der Komponenten bevorzugte Strömungswege bilden die zur Verschlechterung der Mischung und zur Strähnenbildung führt.

Aufgabe der vorliegenden Erfindung ist es die bekannten statischen Mischer dahingehend weiterzuentwickeln, dass ein kostengünstiger und praktisch unzerstörbarer statischer Mischeinsatz für Spritzdüsen oder Schmelzemischer bei der Extrusion in der Kunststoffverarbeitung entsteht der nur aus wenigen Einzelteilen besteht, kürzer als bekannte Mischer für diese Anwendung ist und einen wesentlich geringeren Druckverlust und ein kleineres Totvolumen hat. Eine weitere Aufgabe besteht darin kostengünstige Mischelenente mit hoher Mischeffizienz zu finden mit einer Festigkeit und Stabilität die ausreicht um diese auch bei hohem Druckverlust lose in Rohre einzubauen und dass diese auch bei unterschiedlicher Viskosität der Komponenten eingesetzt werden können. Solche Elemente aus Kunststoff sollen auch, wenn es die Anwendung erlaubt, teurere Elemente aus Stahl ersetzen können.

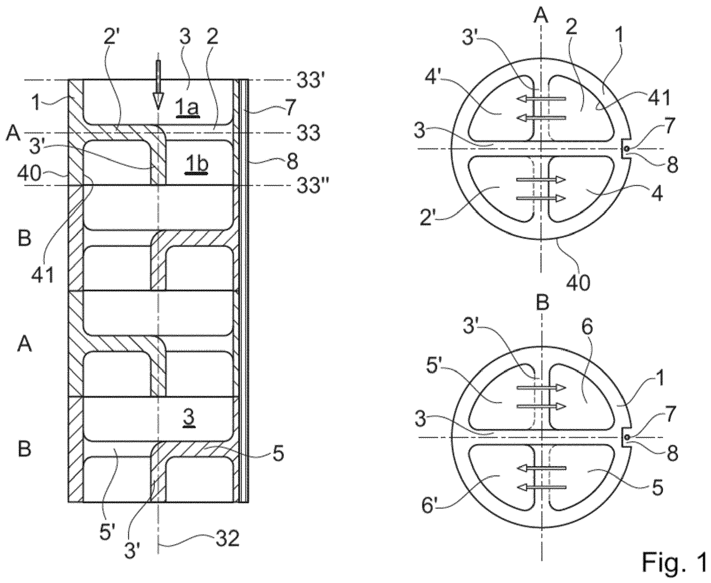

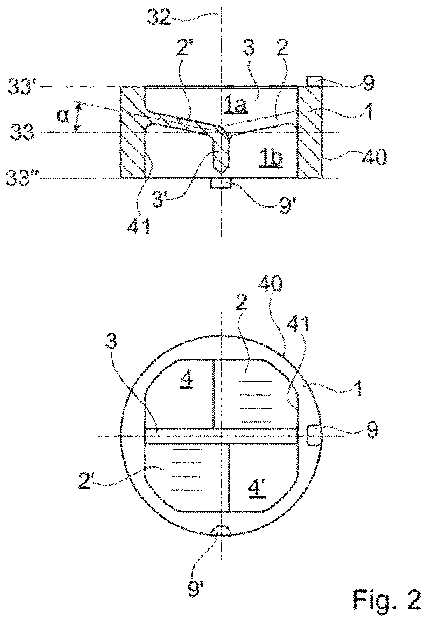

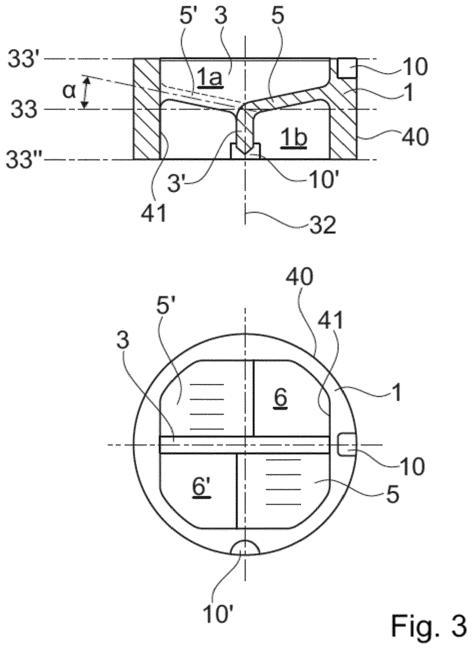

Die Aufgaben werden durch die Merkmale des Patentanspruchs 1 und den abhängigen Patentansprüchen durch eine Weiterentwicklung der statischen Mischer nach EP 0749776 gelöst. Nach der Erfindungsidee werden quer zur Rohrachse stehende Umlenkflächen und radiale, in Richtung der Rohrachse stehende Trennstege in einem Ring 1 mit einer Länge von < 1D, vorzugsweise ca. 0.5D mindestens teilweise fest mit dem äusseren Ring durch Schweissen, Löten oder Kleben verbunden oder vollständig aus einem Guss oder additiv mit dem Ring hergestellt. Ein derartiges, erfindungsgemässes Bauelement mit einer Länge von ca. 0.5D bewirkt eine vollständige Teilung und Dehnung über den ganzen Querschnitt und stellt nicht nur einen kurzen axialen Abschnitt (z. B. ein 1/4 Element) eines vollständigen Mischelements dar. Die Zahl der notwendigen Einzelteile für eine vollständige Vermischung wird so mehr als halbiert. Fig.1 zeigt erfindungsgemässe Mischelemente mit hoher Festigkeit bestehend aus einem tragenden Ring 1 und darin enthalten mindestens 2 quer zur Rohrachse stehenden Umlenkflächen 2, 2' und mindestens je 1 radialen Trennsteg 3,3' auf der in Strömungsrichtung gesehenen Eingangs- (Raum 1a) und Ausgangsseite (Raum 1b) der Umlenkflächen. Die Stege 3 und 3' stehen dabei vorzugsweise in einem Winkel von 90° oder nahezu 90° zueinander. Durch den Trennsteg 3 am Eingang im Raum 1a wird die Strömung in 2 Teile aufgeteilt. Die Umlenkflächen 2 und 2' verfrachten dann die Teilströme quer zur Rohrachse in entgegengesetzter Richtung wo sie dann jeweils durch Öffnungen 4,4' mit normalerweise ca. 1/4 des Rohrquerschnitts auf die Austrittseite (Raum 1b) durchströmen. 2 Schichten am Eintritt werden so durch den Trennsteg 3 geteilt und durch die Umlenkflächen 2,2' getrennt zu den Öffnungen 4,4' geführt. Es entstehen dadurch total 4 Schichten in den Öffnungen 4,4'. Ab hier folgt die Strömung im Raum 1b jeweils auf jeder Stegseite dem um 90° zum Eintrittssteg stehenden Steg 3' der den Rohrquerschnitt wieder in 2 Hälften teilt. Die 4 kurzen Schichten in den Öffnungen werden dabei wieder auf den vollen Rohrquerschnitt ausgedehnt. Auf ein Mischelement der Form Typ A folgt ein Mischelement der Form Typ B. Das Mischelement Typ B ist zum Mischelement Typ A baugleich mit dem Unterschied, dass die Umlenkflächen 5,5' und Öffnungen 6,6' zum Mischelement Typ A zum Steg 3' gegenüberliegend angeordnet sind. Aufeinanderfolgende Mischelemente werden vorzugsweise nicht gegeneinander verdreht eingebaut. Damit kommt immer eine Umlenkfläche des Elements Typ A genau über eine Öffnung des folgenden Mischelements Typ B zu liegen. Die richtige Abfolge der Mischelemente kann z. B. durch einen in eine Nut 8 eingelegten Draht 7 fixiert werden oder die Mischelemente werden durch Stiften Schweissen, Löten, Kleben etc. miteinander verbunden. Eine andere Variante mit Nocken und Vertiefungen zeigen die Fig. 2 und 3. Indem Mischelemente vom Typ A beispielsweise nur mit Nocken und die Elemente vom Typ B nur mit Vertiefungen versehen sind, können diese leicht unterschieden werden. Zudem entstehen immer ebene Endflächen der Ringe wenn die Zahl der Elemente ungerade gewählt wird. Die Strömung wird bei dieser Anordnung optimal erfasst und es gibt keinen direkten Durchgangsweg oder nur eine Drehung der Strömung ohne Teilung bei weniger günstiger Anordnung. Im 2-ten und den folgenden Mischelementen wiederholt sich die Teilung und Dehnung der Schichten in immer gleicher Form. Die weitere Vermischung folgt bei Komponenten mit ähnlicher Viskosität nach dem bekannten Schichtbildungsgesetz.

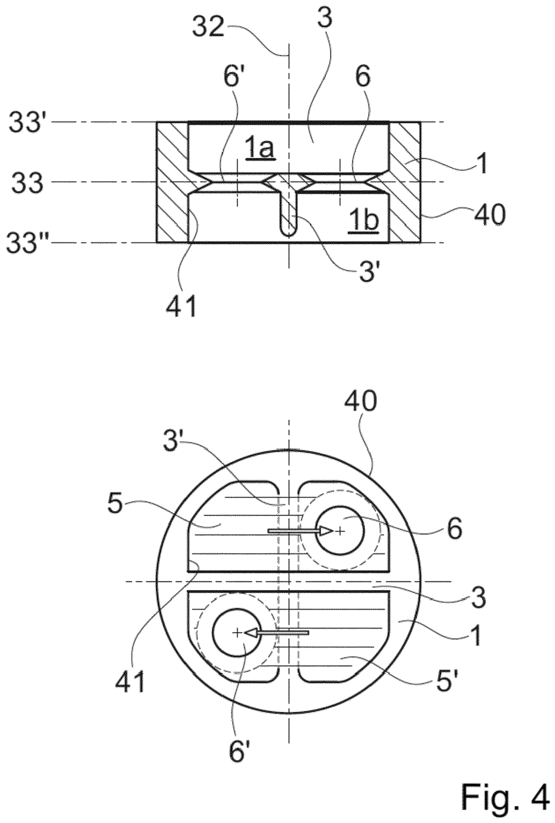

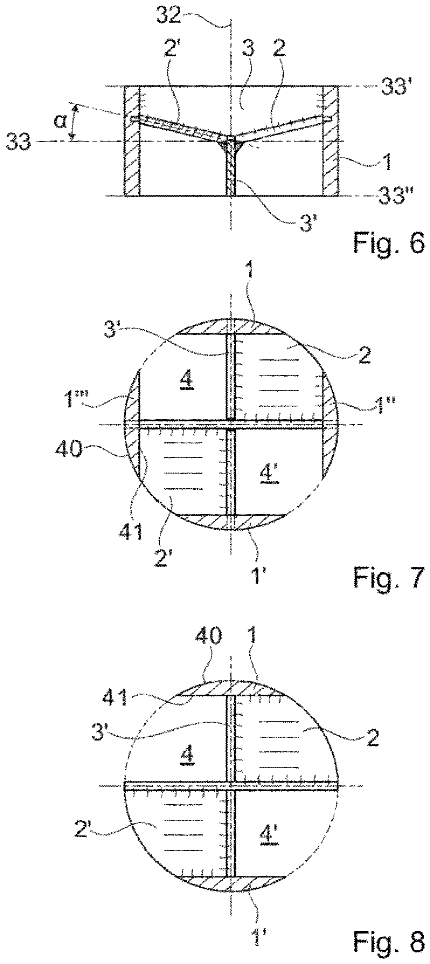

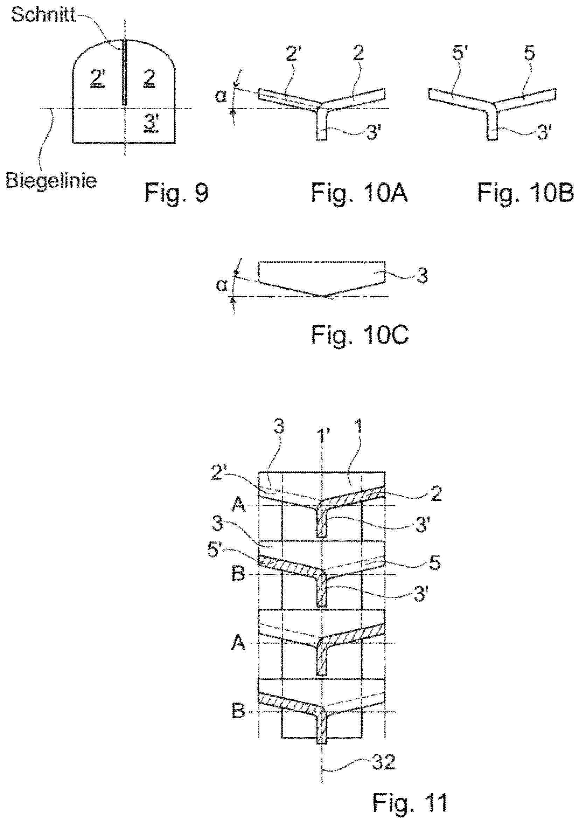

Die Mischerstruktur wird dank dem äusseren, tragenden Ring und den damit verbundenen radialen Trennstegen und Umlenkflächen äusserst stabil. Dies gilt natürlich ganz besonders für Elemente die als Ganzes als monolithisches Teil hergestellt werden. Als besonders günstig für die Stabilität erweisen sich die radialen Trennstege mit axialer Ausrichtung die gleichzeitig als Querträger mit hohem Widerstandsmoment wirken. Die Dicke des äusseren Rings wird so gewählt, dass er die ganze Druckbelastung eines Mischers mit der für die Homogenisierung notwendigen Länge aufnehmen kann. Das erlaubt es die Mischelemente lose in Rohre einzubauen und z. B. auf einem Ring am Austritt abzustützen. Dabei wird gleichzeitig ein dichter Abschluss erreicht der eine Bypass-Strömung zwischen Rohrwand und Mischelement verhindert. Der Nachteil, dass bekannte Mischelemente mehrfach abgestützt oder sogar fest mit der Rohrwand verbunden werden müssen wird damit durch die erfindungsgemässen Mischelemente aufgehoben. Die Rohre können unabhängig von den Mischelementen z. B. nach den Erfordernissen der Druckbehältervorschriften gebaut werden. Ausgebaute Mischelemente sind allseitig offen und zugänglich. Die Mischelemente sind sehr einfach und kostengünstig mit einem 2-teiligen Auf/Zu-Werkzeug als Kunststoffteile oder aus Wachs für die Herstellung der Teile aus Metall im Feingussverfahren oder sogar aus einer keramischen Formmasse herstellbar. Dies gilt auch für die besondere Ausführung nach Fig. 4. Auch moderne 3D-Printverfahren (additive Verfahren) kommen für die Herstellung der Mischkörper aus einem Stück aus allen diesen Materialien in Frage. Für die Herstellung praktisch unzerstörbarer, rostfreier Mischelemente in Print- oder Feingussverfahren eignet sich insbesondere der hochfeste Edelstahl DIN W-Nr. 1.4542. Solche Mischelemente aus thermoplastischem Kunststoff im Spritzgussverfahren hergestellt sind sehr preiswert und dank der erfindungsgemässen Bauform so stabil dass sie, wenn es die Betriebstemperatur zulässt, anstelle von Stahlelementen eingesetzt werden können. Fig. 6 zeigt als Beispiel die Herstellung der Mischelemente aus vorbereiteten Einzelteilen wie äusserem Ring 1, Trennstegen 3,3' und Umlenkflächen 2,2' durch Schweissen. Ein Trennsteg 3' und die Umlenkflächen 2,2' können z. B. auch aus einem einzigen Blechteil (Fig. 9) gebogen werden (Fig. 10A für Typ A und umgekehrt gebogen Fig. 10B für Element Typ B). Der zweite Trennsteg 3 (Fig. 10C) wird dann eingesetzt.

Eine weitere wesentliche Verbesserung des tragenden Rings sieht vor, dass die für die Druckfestigkeit notwendige Materialstärke nicht gleichmässig verteilt wird sondern dass die tragenden Ringabschnitte im Bereich der Trennstege stärker gewählt werden als die Abschnitte dazwischen. Der für die Strömung freie Querschnitt nimmt dadurch immer mehr eine günstige, rechteckige oder quadratische Form an und wird gleichzeitig grösser. Es hat sich gezeigt, dass sich bei geraden und zur Rohrachse quer stehenden Umlenkflächen in den Ecken kleine stagnierende Zonen bilden können. Diese führen manchmal bei sehr empfindlichen Produkten (z. B. bei den Kunststoffen ABS oder PVC) zu Produktveränderungen. Es ist deshalb besonders vorteilhaft zur Vermeidung dieser toten Zonen die Umlenkflächen entsprechend den laminaren Stromlinien zur Querschnittsebene und zur Öffnung hin leicht geneigt einzubauen und die Ecken und Stirnflächen abzurunden. Es genügt dabei eine Neigung von nur 10 - 15° der Umlenkflächen. Eine solche Ausführungsform wird in den Fig. 2 und 3 im Schnitt und in der Ansicht in Strömungsrichtung dargestellt. Bei der Herstellung in einem Gussverfahren oder im 3D-Print Verfahren ist diese Form ohne Mehraufwand realisierbar.

Bei der Anwendung der Erfindungsidee für Mischer zum Einbau in Spritzdüsen oder in Schmelzemischer für die Kunststoffverarbeitung (Fig. 16) ergibt sich eine überraschend günstige Lösung. Ein praktisch unzerstörbarer, metallischer Einsatz besteht nur noch aus 5 - 6 Einzelteilen und hat eine Länge von nur noch 2,5 bis 3 D. Der Druckabfall beträgt ca. 1/3 der bisherigen Spritzdüsen mit X-Strukturen bei gleichem Durchmesser oder es sind kleinere Düsendurchmesser bei gleichem Druckabfall möglich. Das Totvolumen (Mischerinhalt) bei einem Wechsel der Schmelze (z. B. Farbe oder Kunststofftyp) wird dadurch deutlich vermindert.

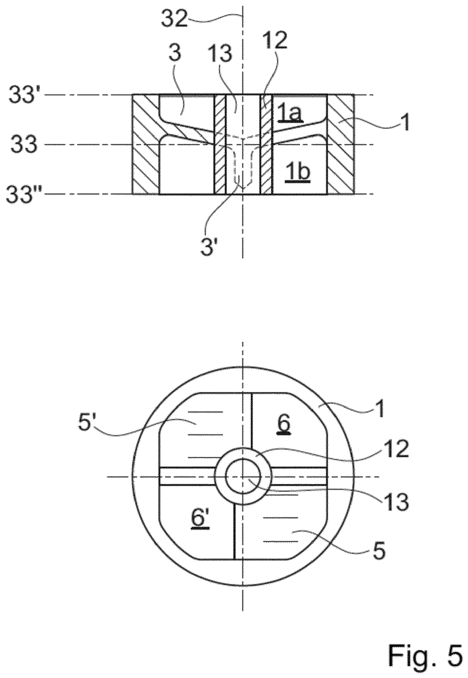

Bei geringeren Festigkeitsansprüchen kann es vorteilhaft sein den äusseren Ring 1 teilweise offen zu lassen so dass nur Verstärkungen in Form von Ringabschnitten (1,1' etc.) im Bereich der Trennstege verbleiben (Fig. 7 oder Fig. 8). Dadurch wird es auch möglich dass sich diese Verstärkungen über mehrere Bauelemente erstrecken (Fig.11) und trotzdem eine gewisse Zugänglichkeit für den Zusammenbau oder die Reinigung und Inspektion erhalten bleibt. Es kann vorteilhaft sein die Elemente im Zentrum mit einer stabförmigen Verstärkung 12 (Fig. 5) zu versehen. Auch ist es möglich im Zentrum dieser Verstärkung 12 eine Bohrung 13 anzubringen. Durch diese Bohrung kann dann z.B. eine Stange oder Draht zur Verbindung mehrerer Elemente gesteckt werden oder es kann die Nadel einer Verschlussdüse durch diese Bohrung geführt werden.

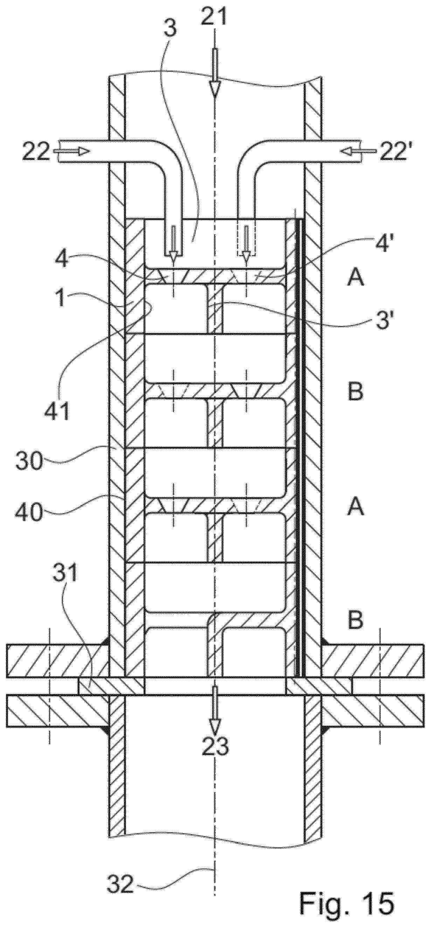

Bei längeren Mischstrecken und unterschiedlichen Viskositäten der Komponenten (Verhältnis grösser 1:100) kann es zur Ausbildung von bevorzugten Stromfäden bzw. unerwünschten Strähnen kommen. Dies kann durch eine besondere Ausführungsform der Umlenkflächen bzw. der Öffnungen (Fig. 4) verhindert werden. Dazu eignet sich die Ausführungsform bei der die Umlenkflächen zur Querebene nicht geneigt sind besser. Die Öffnungen 6,6' auf beiden Seiten des radialen Trennstegs 3 werden in ihrem Querschnitt wesentlich reduziert und z. B. durch Bohrungen ersetzt. Die Umlenkflächen 5,5' verschmelzen so zu einer durchgehenden Scheibe mit Bohrungen. Die gesamte Strömung wird damit sowohl vom Wandbereich und vom Zentrum abgelenkt aber trotzdem bleibt die Funktion der Teilung und Dehnung bzw. Schichtbildung wie bei den normalen Mischelementen erhalten. Solche Elemente werden bevorzugt jeweils nach 5 - 6 normalen Elementen eingesetzt wenn die Gefahr einer Strähnenbildung besteht. Bei der Mischung von Komponenten mit sehr unterschiedlichen Viskositäten (Verhältnis grösser 1:1000) oder gar dann wenn die Komponenten nicht oder nur teilweise ineinander löslich sind (schwierige Komponenten) müssen für eine erfolgreiche Mischung oder Dispergierung höhere Scherkräfte und Dehnströmungen im Mischer erzeugt werden. In der Vergangenheit wurde versucht diese Aufgabe zu lösen mit einer Kombination von Lochplatten oder Lochplatten und statischen Mischern. Dabei werden jedoch die Komponenten nicht speziell durch Trennstege und Leitflächen in vorbestimmte Richtungen und getrennte Räume geführt. Die erfindungsgemässen Mischelemente haben eine weitere, überraschende Eigenschaft. Mit dem Bohrungsdurchmesser können lokal beim Durchgang durch die Scheibe praktisch beliebig hohe Schergeschwindigkeiten innerhalb der Mischelemente eingestellt werden. Dabei wird die Strömung durch die Trennstege laufend geteilt und auf beiden Seiten der Trennstege in entgegengesetzten Richtungen zu den Bohrungen geführt. Nach dem Austritt aus den Bohrungen in den folgenden Raum erfahren die Komponenten wieder eine Dehnung auf den vollen Querschnitt in der durch den Trennsteg vorgegebenen Richtung und zwar wiederum in entgegengesetzter Richtung auf beiden Seiten eines Trennsteges. Es bildet sich so wieder eine für diese Elemente typische, kalanderartige Verschichtung, jedoch mit erhöhter Scherung beim Durchtritt durch die Scheiben. Eine solche, vom Rohrdurchmesser unabhängige Einstellmöglichkeit der Schergeschwindigkeit mit anschliessender Dehnung ist bisher einmalig für einen statischen Mischer. Dabei ist es vorteilhaft auf jeder Seite eines radialen Trennstegs 3 nur je eine Öffnung (6,6') zuzulassen weil dann die unterschiedlichen Komponenten gemeinsam die Scherzone im engsten Querschnitt durchlaufen müssen. Der Druckverlust steigt dabei viel weniger an, als erwartet werden könnte weil die axiale Länge der Scherzonen nur kurz ist. Mit Vorteil sind die Bohrungen einseitig oder beidseitig konisch erweitert. Dadurch wird die Länge der Scherzone und damit der Druckverlust, noch weiter reduziert aber die Schergeschwindigkeit bleibt erhalten. Als besonders schwierig gilt die Mischung von niederviskosen und hochviskosen Komponenten in ähnlichen Mengen oder sogar überwiegendem Anteil der niederviskosen Komponente. Ein solches Beispiel ist die Mischung von Wasser mit hochviskoser Glukoselösung. Die homogene Mischung hat hier nur eine geringe Viskosität, ähnlich wie Wasser. Es ist daher in einem üblichen statischen Mischer nicht möglich ausreichende Scherkräfte für die Vermischung zu erzeugen. Versuche mit den oben beschriebenen, erfindungsgemässen Mischelementen haben gezeigt, dass bereits mit 20 dieser Elemente eine solche Mischung möglich ist. Geringe Mengen an niederviskose Additive die in ein hochviskoses Medium gemischt werden sollen, werden mit Vorteil direkt in die Öffnungen der Scheiben dosiert, wie in Fig. 15 gezeigt wird. Eine solche Anwendung betrifft z. B. das In-line Mischen von Polystyrolschmelzen mit Mineralöl. In einem Mischer können nur Mischelemente mit Bohrungen allein oder in Kombination mit normalen Mischelementen mit maximalen Öffnungen vorkommen.

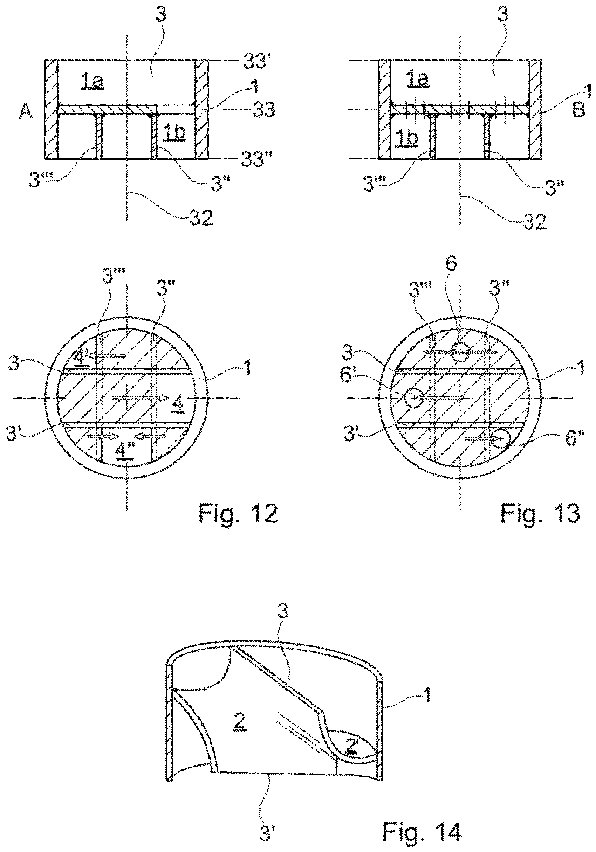

Die Innenteile im Ring der Mischelemente können auch mehr als zwei Umlenkflächen und Trennstege aufweisen (Fig. 12 und Fig. 13). Fig. 12 zeigt ein Element Typ A mit 2 Trennstegen 3,3' am Eintritt, 3 Öffnungen 4,4' und 4" und den Umlenkflächen sowie den Trennstegen 3",3'" auf der Austrittseite. Fig. 13 zeigt ein Element Typ B mit zum Typ A versetzten Öffnungen 6,6' und 6". In diesem Beispiel sind die Öffnungen ebenfalls durch Bohrungen in den ebenen Flächen reduziert. Auch wendelartig verwundene Innenteile (Fig. 14) sind möglich.

Nachfolgend wird die Erfindung anhand von Zeichnungen erläutert.
- Fig. 1: Längsschnitt durch eine Baugruppe aus 4 Mischelementen in der Reihenfolge der Typen A/B/A/B in Strömungsrichtung angeordnet. Die Umlenkflächen jedes Elements teilen dessen Raum in einen axialen Abschnitt 1a und 1b. Auf ein Element Typ A folgt ein Element Typ B sodass immer eine Öffnung über einer Umlenkfläche zu liegen kommt bzw. die Umlenkflächen und Öffnungen gegeneinander versetzt sind. Die richtige Anordnung wird z. B. durch eine Nut 8 in den Elementen und einen durchgehenden Draht oder Stab 7 fixiert. Daneben Ansicht in Strömungsrichtung eines Mischelements Typ A mit zwei quer zur Rohrachse stehenden, geraden Umlenkflächen 2,2', zwei senkrecht dazu stehenden radialen Trennstegen 3,3' sowie zwei Öffnungen 4, 4' und einem äusserem Ring 1. Die radialen Trennstege 3 und 3' stehen in Richtung der Rohrachse und in einem Winkel von vorzugsweise 90° zueinander und Ansicht in Strömungsrichtung eines Mischelements Typ B, mit zum Element Typ A versetzter Anordnung der Umlenkflächen 5,5' und der Öffnungen 6,6'.
- Fig. 2: Längsschnitt und Ansicht in Strömungsrichtung eines Mischelements Typ A wie in Fig.1 aber mit zur Querebene leicht geneigten (Winkel α) Umlenkflächen 2,2', Abrundungen und annähernd quadratischer Innenkontur des äusseren Rings 1 sowie Nocken 9,9' zur Positionierung.
- Fig. 3: Längsschnitt und Ansicht in Strömungsrichtung eines Mischelements Typ B wie in Fig.2 aber mit Vertiefungen 10,10' zur Positionierung. Element Typ B hat nur Vertiefungen in die die Nocken des Elements Typ A in eindeutiger Zuordnung passen damit die richtig Reihenfolge und Ausrichtung sichergestellt ist.
- Fig. 4: Längsschnitt und Ansicht in Strömungsrichtung eines Element nach Fig.1 wobei die Öffnungen 6,6' auf jeder Seite des Trennstegs 3 zu Bohrungen 6,6' mit wesentlich kleinerem Querschnitt reduziert sind und die querstehenden Umlenkflächen 5,5' zu einer einzigen Scheibe verschmelzen. Die Bohrungen 6,6' führen wiederum vom Raum 1a zum Raum 1b und münden dort je zu einer Seite des Austrittsstegs 3'. Es ist von Vorteil die Bohrungen durch konische Erweiterungen zum Eintritt und/oder zum Austritt zu vergrössern.
- Fig. 5: Längsschnitt und Ansicht in Strömungsrichtung eines Elementes Typ B nach Fig.3 wobei in der Rohrmitte eine Stange 12 mit einer Bohrung 13 integriert ist.
- Fig. 6: Längsschnitt eines Elements Typ A mit geneigten Umlenkflächen wie Fig. 2 in geschweisster Ausführung aus Ring 1, radialen Trennstegen 3,3' und Umlenkflächen 2,2'.
- Fig. 7: Ansicht in Strömungsrichtung eines Mischelements in geschweisster Ausführung wobei der äussere Ring unterbrochen ist und nur noch aus 4 einzelnen Ringabschnitten 1,1', 1" und 1'" besteht. Die Ringabschnitte können sich in axialer Richtung stangenförmig über mehre Mischelemente erstrecken. Dabei wechseln sich wiederum Elemente von Typ A und Typ B ab. Die radialen Trennstege 3,3' können dabei auch ganz oder teilweise durch Aussparungen in den Ringabschnitten durchgesteckt sein.
- Fig. 8: Ansicht in Strömungsrichtung eines Mischelements Typ A in geschweisster Ausführung wobei der äussere Ring unterbrochen ist und nur noch aus 2 einzelnen Ringabschnitten besteht. Die Ringabschnitte können sich in axialer Richtung stangenförmig über mehre Mischelemente erstrecken. Dabei wechseln sich wiederum Elemente von Typ A und Typ B ab.
- Fig. 9: Herstellung der Innenteile aus einem geschlitzten und ausgeschnittenen Blechteil mit den Umlenkflächen 2,2' und dem radialen Trennsteg 3' und eingesetztem radialen Trennsteg 3, Fig. 10C. Zur Herstellung der Typen A und B werden die Flächen 2,2' (Fig. 10A) bzw. 5,5' (Fig. 10B) gegensätzlich umgebogen.
- Fig. 10A: Aus Blechteil wie Fig. 9 gebogenes Teilelement Typ A aus Umlenkflächen 2,2' und Trennsteg 3'.
- Fig. 10B: Aus Blechteil wie Fig. 9 gegensätzlich gebogenes Teilelement Typ B aus Umlenkflächen 5,5' und Trennsteg 3.
- Fig. 10C: Loser Trennsteg 3 zum Einsetzen.
- Fig. 11: Längsschnitt durch eine Baugruppe aus 4 Mischelementen verbunden mit Stangen 1, 1' in Form von Ringabschnitten. Baugruppen können aus Einzelteilen (Flächen, Stege, Stangen) zusammengefügt oder als monolithisches Bauteil ausgebildet sein.
- Fig. 12: Beispiel eines Mischelementes Typ A mit je 2 Trennstegen in den Abschnitten 1a (3,3') und 1b (3", 3"') bzw. auf jeder Seite der Umlenkflächen. In diesem Beispiel haben die Öffnungen (4,4' und 4") den maximalen Querschnitt. Jede Öffnung mündet in einen durch Stege getrennten Austrittskanal. Die Öffnungen und Umlenkflächen der Elemente Typ A und Typ B sind wiederum zueinander versetzt.
- Fig. 13: Beispiel eines Mischelementes Typ B mit je 2 Trennstegen in den Abschnitten 1a 3,3' und 1b 3",3'" bzw. auf jeder Seite der Umlenkflächen. In diesem Beispiel haben die Öffnungen in Form von Bohrungen 6,6' und 6" einen reduzierten Querschnitt. Jede Öffnung mündet in einen durch Stege getrennten Austrittskanal. Die Öffnungen und Umlenkflächen der Elemente Typ A und Typ B sind wiederum zueinander versetzt.
- Fig. 14: Wendelartig geformtes Innenteile mit 2 Trennstegen 3,3' und 2 Umlenkflächen 2,2' wobei diese Teilflächen eine zusammenhängende, gewundene Fläche bilden die mit dem äusseren Ring 1 oder den Ringabschnitten verbunden sind.
- Fig. 15: Einbau- und Anwendungsbeispiel von Mischelementen in einem Rohr 30. Die Mischelemente werden z. B. auf einem Ring 31 dicht abgestützt. Ein niederviskoses Additiv 22,22' wird direkt zu einem hochviskosen Hauptstrom in die Bohrungen eines Mischelements Typ A nach Fig. 4 dosiert. Es folgen weitere Mischelemente wobei diese reduzierte oder maximal grosse Öffnungen aufweisen können bis die Mischung 23 genügend homogen ist.
- Fig. 16: Einbaubeispiel der Mischelemente in eine Mischdüse einer KunststoffSpritzgiessmaschine.

## Patentansprüche

1. Mischelement mit hoher Festigkeit zum Einbau in ein Rohr bestehend aus einem äusseren Ring 1 und damit mindestens teilweise verbundenen, quer zur Rohrachse stehenden, inneren Umlenkflächen 2,2' und in axialer Richtung stehenden radialen Trennstegen 3,3' wobei die Umlenkflächen das Mischelement in zwei axiale Abschnitte 1a, 1b teilen und in jedem dieser Abschnitte mindestens 1 radialer Trennsteg angeordnet ist und die Umlenkflächen offene Durchtritte 4,4' in axialer Richtung aufweisen und die radialen Trennstege auf beiden Seiten der Umlenkflächen und die radialen Trennstege aufeinanderfolgender Mischelemente sich kreuzen.

2. Mischelement nach Anspruch 1, **dadurch gekennzeichnet, dass** mindestens zwei radiale Trennstege pro Abschnitt 1a 3,3' und 1b 3",3'"' vorhanden sind.

3. Mischer aus mindestens zwei aufeinander folgenden Mischelementen nach einem der vorangehenden Ansprüche, **dadurch gekennzeichnet, dass** sich die radialen Trennstege 3,3' aufeinanderfolgender Mischelemente kreuzen und andererseits die querstehenden Umlenkflächen und die Öffnungen aufeinanderfolgender Mischelemente gegeneinander versetzt sind so dass die Strömung keinen direkten axialen Durchgang findet oder nur eine Drehung erfährt.

4. Mischelement nach einem der vorangehenden Ansprüche, **dadurch gekennzeichnet, dass** die quer zur Rohrachse stehenden, inneren Umlenkflächen den ganzen Rohrquerschnitt abdecken oder eine einzige Fläche bilden und nur mindestens eine kleine Öffnung 6,6' die jeweils auf einer Teilfläche 5,5' zu je einer Seite eines radialen Trennstegs 3 angeordnet ist und einen Durchtritt vom ersten Abschnitt 1a in den folgenden Abschnitt 1b auf jeweils gegenüberliegenden Seiten eines austrittseitigen, radialen Trennstegs 3' freilässt und dass der gesamte, engste Querschnitt aller Öffnungen auf einer dieser Teilflächen kleiner als 1/6 des Rohrquerschnitts beträgt.

5. Mischelement nach Anspruch 4, **dadurch gekennzeichnet, dass** die Öffnungen in den querstehenden Umlenkflächen vom engsten Querschnitt aus einseitig oder beidseitig konisch erweitert sind.

6. Anwendung von Mischelementen nach einem der Ansprüche 4 oder 5 allein oder in Kombination mit anderen Mischelementen für die Mischung von Komponenten mit einem Viskositätsverhältnis von grösser 1:100.

7. Anwendung von Mischelementen nach einem der Ansprüche 4 oder 5 für die Mischung von Komponenten mit einem Viskositätsverhältnis von grösser 1:100 **dadurch gekennzeichnet, dass** die niederviskose Komponente direkt in die Öffnungen des ersten Mischelements dosiert wird.

8. Mischelement nach einem der vorangehenden Ansprüche, **dadurch gekennzeichnet, dass** in der Rohrachse ein Verstärkung 12 über die ganze Elementlänge angebracht ist und dass die Verstärkung 12 in der Rohrachse eine Bohrung 13 aufweist.

9. Mischelement nach einem der vorangehenden Ansprüche, **dadurch gekennzeichnet, dass** die Länge des Mischelements kleiner als dessen äusserer Durchmesser D, vorzugsweise kleiner als 0.5 D ist.

10. Mischelement nach einem der vorangehenden Ansprüche, **dadurch gekennzeichnet, dass** die gesamte Länge der radialen Trennstege auf der Eintrittshälfte 1a und auf der Austrittshälfte 1b kürzer als die Länge des Mischelementes ist und dass zwischen den Trennstegen aufeinanderfolgender Mischelemente ein Zwischenraum bleibt.

11. Mischelement nach einem der vorangehenden Ansprüche, **dadurch gekennzeichnet, dass** Umlenkflächen, Trennstege und Verstärkungen mit dem äusseren Ring ein monolithisches Teil bilden das durch Metall-Feinguss, Kunststoffspritzguss, keramische Formgebung oder mit einem additiven Verfahren aus einem dieser Materialien hergestellt ist.

12. Mischelement nach einem der vorangehenden Ansprüche, **dadurch gekennzeichnet, dass** der äussere Ring unterbrochen ist und aus mindestens 2 Ringabschnitten 1,1' an den rohrseitigen Enden der radialen Trennstege besteht und dass die Ringabschnitte mit den radialen Trennstegen verbunden sind.

13. Mischer aus Mischelementen nach einem der vorangehenden Ansprüche, **dadurch gekennzeichnet, dass** sich der Ring oder die Ringabschnitte über mindestens 2 Mischelemente erstrecken.

14. Mischelement nach einem der vorangehenden Ansprüche, **dadurch gekennzeichnet, dass** die Materialdicke des tragenden Rings oder der Ringabschnitte im Bereich der Trennstege grösser ist und die Innenwand des Rings oder der Ringabschnitte in diesem Bereich senkrecht oder nahezu senkrecht zu den Trennstegen verläuft so dass der für die Strömung freie Querschnitt mindestens annähernd eine rechteckige oder quadratische Form annimmt.

15. Anwendung der Mischelemente nach einem der vorangehenden Ansprüche als statischer Mischer in einer Mischdüse für den Spritzguss oder die Extrusion von thermoplastischem Kunststoff.
